# EUROPEAN PATENT SPECIFICATION

(11) **EP 4 279 256 B1**
(45) Date of publication and mention of the grant of the patent: **21.08.2024**
(21) Application number: 22173620.0
(22) Date of filing: 16.05.2022
(51) Int. Cl.: B29C 70/88, B29C 70/54, B29C 70/24, B32B 5/06, D04B 21/16, G01M 5/00

(54) **ARRANGEMENT INCLUDING A FIBRE-REINFORCED COMPOSITE COMPONENT OR ASSEMBLY, AIRCRAFT OR SPACECRAFT, METHOD OF PRODUCING AN ARRANGEMENT, AS WELL AS METHOD OF MONITORING STRUCTURAL INTEGRITY**
ANORDNUNG, DIE EIN BAUTEIL ODER EINE ANORDNUNG AUS FASERVERSTÄRKTEM VERBUNDSTOFF EINSCHLIESST, LUFTFAHRZEUGE ODER RAUMFAHRZEUGE, VERFAHREN ZUM HERSTELLEN EINER ANORDNUNG SOWIE VERFAHREN ZUM ÜBERWACHEN DER STRUKTURELLEN INTEGRITÄT
AGENCEMENT COMPRENANT UN COMPOSANT OU UN ENSEMBLE COMPOSITE RENFORCÉ PAR DES FIBRES, AÉRONEF OU ENGIN SPATIAL, PROCÉDÉ DE PRODUCTION D'UN AGENCEMENT, AINSI QUE PROCÉDÉ DE SURVEILLANCE D'INTÉGRITÉ STRUCTURELLE

(43) Date of publication of application: 22.11.2023
(73) Proprietor: Airbus Operations GmbH, 21129 Hamburg (DE); Airbus S.A.S., 31700 Blagnac Cedex (FR)
(72) Inventor: Linde, Peter, 21129 Hamburg (DE); Lenczowski, Blanka, 21129 Hamburg (DE); Heltsch, Norbert, 21129 Hamburg (DE)
(74) Representative: Isarpatent

(56) References cited:
- DE-A1- 102008 058 882
- US-A- 5 503 887

## Description

### FIELD OF THE INVENTION

The invention relates to an arrangement including a fibre-reinforced composite component or composite assembly. Further, the invention relates to an aircraft or spacecraft comprising at least one such arrangement, to a method of producing an arrangement that includes a fibre-reinforced composite component or composite assembly, and to a method of monitoring the structural integrity of a fibre-reinforced composite component or composite assembly.

### TECHNICAL BACKGROUND

Although the invention may be useful in connection with various components or component assemblies made from composite materials in many fields of technology, the invention and the underlying problem will be explained in the following in exemplary manner with reference to aircraft or spacecraft production, more particularly in connection with implementing structural joints in aircraft or spacecraft structures, but without limiting the invention to that effect.

In the context of producing aircraft structures from fibre-reinforced composite materials such as fibre-reinforced synthetic materials, several techniques of joining parts of a composite component or components forming a composite assembly to each other have already been proposed, including riveting and adhesive bonding. Welding of components comprising thermoplastic has also been proposed.

Riveting requires a step of drilling holes for rivets and a step of inserting the rivets. Also, rivets add weight to the structure and may require laminate thicknesses to be selected and designed accordingly, which also may lead to an increase in the structural weight and to an increase in cost due to higher workload and need for additional parts, compared to bonding or welding.

As a further way of implementing a structural connection, stitching of reinforcing materials, e.g. dry reinforcing fibre plies, has already been suggested. As an example, dry reinforcing fibre plies, used to form one or more composite parts, may be stacked and connected by stitching through the plies, e.g. for out-of-plane reinforcement of a composite part. Then, the dry fibre plies may be infused with resin, e.g. using VARTM or vacuum-assisted resin transfer moulding, and cured. Various stitching patterns, needle configurations and types of needle operation are conceivable. For example, a stitching head using two needles may be used. Further, for instance, one needle may be aligned vertically and the other may be angled. Alternatively, both needles may be inclined or one of the needles may operate horizontally. Typically, during stitching, loops are created that tie the composite plies together with a certain clamping action. A structural joint involving an adhesive connection via the cured matrix can be effectively strengthened in this manner. Also, another useful effect of stitching is that the manufacturing process can be supported and facilitated by fixation of a pre-form, for example of a stringer pre-form on plies that are provided to form a skin.

Based on previous work on stitched composites, this technique appears promising, also regarding the mechanical behaviour of composite components or assemblies produced in this manner.

DE102008058882A discloses a fibre-reinforced composite structure comprising structural health monitoring means.

It would, however, be desirable to be able to monitor the structural integrity, or structural "health", of a stitched component or component assembly, particularly the health or integrity of stitched seams, in a manner that is reliable and can be implemented in an economical way, in particular within complex structures including a large number of stitched connections.

### SUMMARY OF THE INVENTION

In view of this background, the problem to be solved by the present invention is to provide a way of monitoring the structural integrity of a composite component or assembly including a stitched seam, which can be implemented in an economical manner.

This problem can be solved by an arrangement comprising the features of claim 1 and/or by an aircraft or spacecraft comprising the features of claim 12 and/or by a method comprising the features of claim 13 and/or by a method comprising the features of claim 14.

Accordingly, an arrangement is proposed which includes:
- a fibre-reinforced composite component or composite assembly which comprises at least first and second reinforcing fibre formation sections stitched to each other using a yarn so as to connect the first and second reinforcing fibre formation sections along a seam, the yarn being electrically conductive along a length thereof; and
- a monitoring device adapted and coupled to the yarn in such a manner as to be capable of sending an electrical input signal along at least a section of the yarn that forms the seam or part thereof and receiving a response signal on the yarn.

There is further proposed an aircraft or spacecraft which comprises at least one such arrangement, wherein the composite component or composite assembly in particular forms part of an aircraft or spacecraft structure.

Still further, the invention provides a method of producing an arrangement including a fibre-reinforced composite component or composite assembly, the method comprising:
- providing at least first and second reinforcing fibre formation sections;
- providing a yarn that is electrically conductive along a length thereof;
- arranging the first and second reinforcing fibre formation sections relative to each other;
- stitching through the first and second reinforcing fibre formation sections using the yarn so as to connect the first and second fibre formation sections along a seam;
- providing a monitoring device and coupling the monitoring device to the yarn in such a manner as to enable the monitoring device to send an electrical input signal along at least a section of the yarn that forms at least part of the seam and to receive a response signal on the yarn.

Moreover, the invention provides a method of monitoring the structural integrity of a fibre-reinforced composite component or composite assembly including a seam formed by stitching using a yarn, wherein the method comprises monitoring the structural health status of the seam, including:
- sending an electrical input signal along at least a section of the yarn that forms at least part of the seam; and
- receiving a response signal on the yarn and evaluating the response signal.

An idea underlying the present invention is to implement and/or strengthen a joint by means of the seam wherein the joint is more lightweight than a riveted joint and at the same time can be monitored in economical and effective manner. The region of the joint can be formed with reduced weight because stress concentrations tend to be comparatively small in stitched joints due to the large number of stitches, hence the material layer thicknesses may be comparatively small in the area of the joint. Use of the conductive stitching yarn as a distributed sensor advantageously makes it possible to avoid separate sensors for structural health monitoring of the seam as well as the effort and cost involved for installation and maintenance of such separate sensors, and thus may enable structural health monitoring at a large number of stitched joints in economical manner, for example throughout an entire structure such as e.g. an aircraft structure.

Furthermore, monitoring of structural integrity or structural health using the invention makes it possible to capture, via the sensor function of the yarn, both tearing mode damage as well as rupture mode damage in the seam at the joint. The invention makes it possible to detect impairment of the integrity of the yarn, which may for instance include damage mechanisms of:
- over-strain and stretching, or rupture, of the yarn due to mechanical overload in the joint, particularly by overstraining the joint in an out-of-plane direction and peeling of one ply from another at the seam; or
- rupture of the yarn due to external mechanical load or externally caused cut that impairs the seam and severs or damages the yarn; or
- over-strain and stretching, or rupture, of the yarn inflicted by local impact damage, and further in particular a spread of an in-plane damage, such as for example a skin-stringer separation, triggered by such an impact and the peel thereof.

The invention does not only enable detection of a full rupture of a connection at the stitched seam, but additionally, for example, initial damage beyond limit load capability and well within the damage tolerance domain may advantageously be detected, too.

Furthermore, the invention in particular may enable the detection of formation and/or spreading of damage over longer periods of time such as e.g. the operational life of a component or assembly, for example a component or assembly of an aircraft or spacecraft structure.

Accordingly, the invention may contribute to the usefulness of stitched composites in complex structures. In particular, the invention may contribute to implementing an extent or amount of stitching which, while preferably being as small as possible to reduce cost, workload and disturbance of the underlying fibre formations, makes it possible to effectively prevent excessive spread of damage and at the same time enables reliable detection of the damage, in particular once the damage becomes significant.

Advantageous improvements and developments of the invention are contained in the dependent claims as well as in the description referring to the drawings.

In accordance with a development, the monitoring device is adapted to detect or measure an ohmic resistance and/or impedance of a portion of the yarn which includes the section of the yarn forming the seam or part thereof. In this way, the integrity or health of the yarn and thus of the seam formed using the yarn can be evaluated in a relatively simple manner.

In particular, the monitoring device may be adapted to send a constant electrical input signal or a time-varying electrical input signal. For example, the signal may be a constant voltage input signal or a time-varying voltage input signal.

In a further development, the monitoring device may be adapted to provide the input signal at intervals or within continuous time periods or continuously during the operational life of the composite component or composite assembly. In this way, an indication regarding the health status of the seam can be obtained during the operational life of the component or assembly.

For instance, the monitoring device may be configured so as to enable to send the input signal as well as to receive and evaluate the response signal when a device containing the component or assembly is being inspected, e.g. during routine inspection of an aircraft, for example during pre-takeoff inspection. In this manner, in case the monitoring device indicates a possible damage or incipient damage at a seam, appropriate action can be taken by maintenance staff, such as visual inspection of the seam. Further, the monitoring device may for example be used in predictive maintenance to trigger inspection. Planned inspections could thereby be reduced significantly.

In particular, within the seam, the yarn has a function of supporting mechanical loads as well as a function of an integrated structural health sensor device. In this manner, the yarn may be used as a multi-functional yarn. Effort and cost for additional, individual sensors for structural health monitoring can be avoided.

In particular, the seam forms part of a mechanically load-bearing structural joint. Further, in particular, the seam may be configured to strengthen the structural joint and/or to improve or enable damage-tolerant behaviour of the joint, e.g. in the manner of so-called selective stitching, for example in infused-type shells such as fuselage shells. The economical way of monitoring the structural integrity of the seam afforded by the invention is particularly advantageous in case of structural seams, which may have to transmit considerable load. The invention may make it possible to detect a damage in such joints when the damage becomes significant.

The yarn may in some preferred developments comprise a fibre filament material that is of the same type as a filament material of the reinforcing fibre formation sections. For instance, the filament material may be carbon fibre filaments. In other useful developments, however, the fibre filament material of the yarn may differ from that of the reinforcing fibre formation sections.

In a development, the yarn comprises load-bearing electrically conductive filaments. In particular, the yarn may comprise carbon fibre filaments, for example carbon fibre filaments of the same type as those of the reinforcing fibre formation sections. Already such a yarn may yield sufficient conductivity to enable health monitoring, e.g. by a trip-wire type function.

Alternatively, the yarn may be formed from a carbon nanotube based material, such as Tuball^{™} available from the company Conyar. Such a yarn may exhibit specific conductive properties that change with elongation.

In some variants, the electrically conductive filaments or the carbon nanotube based material may form a load-bearing yarn core.

In a development, the yarn comprises a load-bearing yarn core as well as an electrically conductive layer provided on the yarn core. Different portions of the cross-section of the yarn may in this manner be adapted to a mechanical and electrical function, respectively.

In a development, the load-bearing core of the yarn may comprise glass fibres or carbon fibres. A yarn having such a core can sustain considerable loads.

In other developments, the load-bearing core of the yarn may comprise fibres from a polymeric material such as Vectran^{™} fibres, available from the company Kuraray, or Dyneema^{®} fibres, e.g. available from DSM. Fibres e.g. from Vectran^{™} or Dyneema^{®} are more ductile than, for instance, glass fibres.

In particular, the electrically conductive layer provided on the yarn core comprises carbon nanotubes. Such a conductive yarn may be highly stretchable and durable, and therefore can be particularly well-suited for forming a seam and monitoring the status thereof. The carbon nanotubes may in particular be deposited as a coating on the load-bearing yarn core.

For example, in some implementations, the electrically conductive layer may be formed as a coating made with a carbon nanotube based material commercially available under the brand Tuball^{™} from the company Conyar. Tuball^{™} graphene coating could be used to enable sufficient conductivity along the length of the yarn. The conductive properties obtained may change with yarn elongation.

It may be preferable to provide the electrically conductive layer on the yarn core in cases in which the load-bearing yarn core is not electrically conductive or has insufficient electrical conductivity, in particular in case of a core from glass fibres or polymeric fibres, e.g. Vectran^{™} or Dyneema^{®}.

In a further development, the yarn furthermore comprises an electrically isolating outer coating. The isolating outer coating may be provided, for example deposited, on an outer side of the conductive layer, or on an outer side of the yarn core in case the yarn core is electrically conductive and there is no electrically conductive layer on the yarn core. In this manner, undesired electrically conductive contact with other yarns, possibly other electrically conductive yarns or electrically conductive filaments, such as carbon fibre filaments, of the reinforcing fibre formations, which might lead to undesired electric currents and current loss, can be prevented. This may help to further improve the reliability of the structural health monitoring at least in some implementations. Providing the yarn with the electrically isolating outer coating may be preferable in particular if the reinforcing fibre formation sections are made using carbon fibres to form a carbon fibre reinforced synthetic substrate.

In particular, the electrically isolating outer coating may be formed with an electrically isolating epoxy resin.

In further developments, the transverse dimension, e.g. diameter or thickness, of the electrically conductive yarn core or of the electrically conductive layer is selected in such a manner as to enable an electrical conductivity along the length of the yarn and an outward electrical insulation in the transverse direction. In particular, the transverse dimension is configured such that electrically conductive contact of the yarn to electrically conductive fibres such as carbon fibres of the stitched reinforcing fibre formation sections and resulting current loss and/or short circuits are prevented while an interior portion of the cross-section of the yarn is conductive and enables the monitoring function.

In accordance with a development, the monitoring device comprises at least one electronic circuit, in particular implemented using at least one semiconductor device or a plurality of semiconductor devices. In this manner, the generation of the input signal as well as the receipt and evaluation of the response signal may be performed in a reliable, space-saving and rapid manner.

In an advantageous improvement, the seam is crossed by at least one further seam, wherein the at least one further seam is formed at least in part by stitching using a further yarn, the further yarn being electrically conductive along a length thereof. In particular, the yarn and the further yarn may be of the same type. Hence, regarding the type of the further yarn, reference is made to the explanations above for the yarn. In this improvement, the further yarn can be used for monitoring the structural integrity of the further seam in the same manner as described above for the seam. The crossing seams and corresponding conductive yarns make it possible to determine the location of a possible damage, if present, with increased accuracy. Identifying the damaged spot may thus require even further reduced effort when inspecting the component or assembly in detail. In particular, in case the damage event is captured at substantially the same time, the crossing conductive yarns can make it possible to correctly locate the damage with a high probability.

Furthermore, the crossing seams formed using the yarn and the further yarn may advantageously be used to detect the extent of a damage, in particular a crack and/or to detect a growth rate of the damage, in particular of the crack.

The seam and the further seam may, in an improvement, extend one below the other on different levels without direct contact of the yarn and the further yarn. This can help to avoid electrical contact of the yarns and undesired current from one yarn to the other. Alternatively or additionally, one or both of the yarn and the further yarn may comprise an electrically isolating outer coating as described above.

In a further development, the monitoring device may be configured to send an electrical input signal along at least the section of the yarn and a further electrical input signal along at least the section of the further yarn in a temporally offset manner. This may further help to avoid undesired electric interaction of the yarns.

In particular, the first and second reinforcing fibre formation sections may form part of different composite components joined to each other at the seam to form the composite assembly, or the first and second reinforcing fibre formation sections may form part of the same composite component within which the seam is implemented.

In particular, the reinforcing fibre formation sections and the conductive yarn or yarns may be embedded in a synthetic matrix material. The matrix material may preferably be a curable matrix material, for example an epoxy resin.

In particular, if the yarn comprises an electrically isolating outer coating, the electrically isolating outer coating is preferably adapted to be compatible with the matrix material. In case the yarn is provided with the electrically conductive layer as its outermost layer, this layer may preferably be formed to be compatible with the matrix material. If the yarn is formed without conductive or isolating layer, the yarn core or yarn base material may preferably be selected to be compatible with the matrix material.

Further, in some developments, the first and/or second reinforcing fibre formation sections may comprise carbon fibres. One or more further reinforcing fibre formation section(s), provided as part of the component or assembly, also may in particular comprise carbon fibres.

In variants including a first and/or second reinforcing fibre formation section comprising carbon fibres, preferably, the yarn is provided with the electrically isolating outer coating.

In further developments, the first and/or second reinforcing fibre formation sections may comprise glass fibres. One or more further reinforcing fibre formation section(s), provided as part of the component or assembly, also may in particular comprise glass fibres.

In some variants in which the yarn is used to stitch through fibre formation sections made from glass fibres, the electrically isolating outer coating of the yarn may be omitted.

In a development, the composite component or composite assembly forms part of an aircraft or spacecraft structure. The lightweight connection by stitching and the economical monitoring of the structural integrity thereof afforded by the invention are particularly advantageous for such structures. Still, the invention may in further developments be applied to structures other than aircraft or spacecraft structures.

In a preferred development, the composite assembly is formed as a shell assembly comprising a stringer coupled to a skin, wherein one of the first and second reinforcing fibre formation sections forms part of the stringer, in particular of a stringer foot thereof, and another one of the first and second reinforcing fibre formation sections forms part of the skin. As commercial aircraft are often large and may comprise a considerable number of stringers joined to a skin, the invention in this case contributes to enabling the use of a lightweight stitched connection at those joints which also can be monitored in a reliable and economical manner.

In a development, the shell assembly further comprises a frame or a segment of a frame, wherein the further seam is formed by stitching through a reinforcing fibre formation section forming part of the frame or segment, in particular of a frame foot thereof, using the further yarn. In this manner, a connection of the frame to the skin can be implemented and the structural health thereof can also be monitored in economical manner, and further, within the shell assembly, the location of a possible damage can be established with increased accuracy based on the crossing seams and their yarns.

According to a further development, the shell assembly may comprise a plurality of stringers as well as a plurality of frames extending transverse to the stringers, wherein each of the frames and stringers is coupled to the skin using at least one seam each formed using at least one conductive yarn. In this manner, at least one such seam on each of the stringers and frames can be monitored with respect to the structural integrity thereof.

In particular, in a development of the method of producing an arrangement, the method may comprise providing the reinforcing fibre formation sections in the form of dry fibre formation sections, in particular dry plies of reinforcing fibre textile.

In a further development, the method of producing an arrangement may comprise infiltrating the stitched first and second reinforcing fibre formation sections with resin, in particular by resin-transfer moulding, for example by vacuum assisted resin transfer moulding.

In particular, the first and second fibre formation sections may be stitched to each other to form a preform, or the first and second fibre formation sections may each form part of different preforms.

In a development of the method of monitoring the structural integrity, the method comprises detecting over-straining and/or rupture of the yarn within the section that forms at least part of the seam.

In particular, the method of monitoring the structural integrity may comprise monitoring the electrical resistance or impedance of the section of the yarn that forms at least part of the seam.

In a further development of the method of monitoring the structural integrity, the electrical input signal is sent, and the response signal is received and evaluated, at intervals or during continuous time periods or continuously during the operational life of the composite component or composite assembly. For instance, the input signal may be sent and the response signal received and evaluated during routine inspection, e.g. pre-takeoff inspection, of an aircraft. In further developments, the input signal may be sent and the response signal received and evaluated during active flight, e.g. repeatedly.

The improvements, enhancements and developments of the present invention may be arbitrarily combined with each other whenever this makes sense. Moreover, other possible enhancements, implementations and developments of the present invention comprise combinations of features of the invention which have been described above or will be described in the following in relation to the detailed description of embodiments, even where such a combination has not been expressly mentioned.

In particular, the improvements, enhancements and developments of the invention described above may be applied in analogous manner to each of the arrangement, the aircraft or spacecraft and each of the methods proposed herein.

### BRIEF DESCRIPTION OF THE DRAWINGS

The invention will be explained in the following with reference to the schematic figures of the drawings which illustrate embodiments of the invention. Herein:
- Fig. 1: shows an exemplary aircraft in which arrangements as well as methods in accordance with embodiments of the invention may be used;
- Fig. 2: shows an arrangement according to a first embodiment of the invention, including an intact seam along a structural joint, in a schematic perspective view;
- Fig. 3: shows the arrangement of Fig. 2, wherein a portion of the seam has been damaged and a stitching yarn has been stretched, along with a detail view 33a of the damaged seam portion;
- Fig. 4: shows the arrangement of Fig. 2, wherein a portion of the seam has been damaged and a stitching yarn has been ruptured, along with a detail view 33b of the damaged seam portion;
- Fig. 5: shows part of the arrangement of Fig. 2, wherein a portion of the seam has been damaged and a stitching yarn has been cut due to external action, force or impact;
- Fig. 6: displays an arrangement according to a second embodiment of the invention, comprising seams running transverse to each other, in a schematic perspective view;
- Fig. 7: shows a schematic cross-sectional view of a yarn of a first type which may be used in embodiments of the invention;
- Fig. 8: shows a schematic cross-sectional view of a yarn of a second type which may be used in embodiments of the invention; and
- Fig. 9: shows a schematic cross-sectional view of a yarn of a third type which may be used in embodiments of the invention.

The enclosed drawings are intended to illustrate embodiments of the invention so that the invention may be further understood. The drawings, in conjunction with the description, are intended to explain principles and concepts of the invention. Other embodiments and many of the advantages described may be inferred from the drawings. Elements of the drawings are not necessarily drawn to scale.

Elements, features and components which are identical or which have the same function or effect have been labeled in the drawings using the same reference signs, except where explicitely stated otherwise.

### DETAILED DESCRIPTION OF EMBODIMENTS

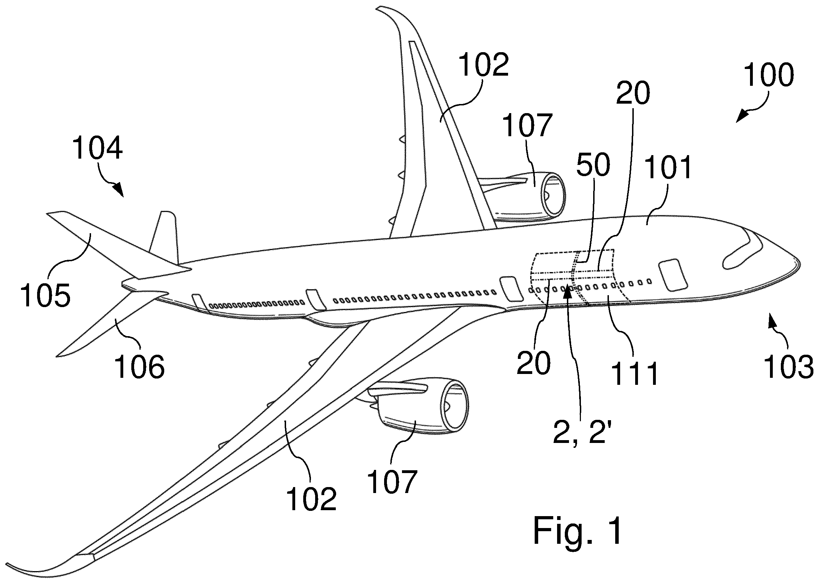

Fig. 1 shows an aircraft 100 comprising a fuselage 101, wings 102, a nose 103 as well as an empennage 104 including a vertical stabilizer 105 and a horizontal stabilizer 106. Also, the aircraft 100 comprises engines 107 attached to the wings 102.

The aircraft 100 comprises a structure made at least in part from fibre-reinforced composite materials, in particular from one or more carbon or glass fibre-reinforced synthetic material(s). An exemplary structural fibre-reinforced composite assembly, which forms part of the structure of the aircraft 100, is a shell assembly 111, illustrated in Fig. 1 in exemplary and schematic manner. The shell assembly 111 is part of the fuselage 101, which comprises a plurality of further shell assemblies of the same or similar type. The shell assembly 111 comprises a skin portion stiffened, on the inner side thereof, by a plurality of stringers 20, running substantially along a longitudinal direction of the fuselage 101, and by a plurality of segments of frames 50, running substantially along a circumferential direction of the fuselage 101. In exemplary manner, a frame 50 and two stringers 20 are schematically shown in Fig. 1.

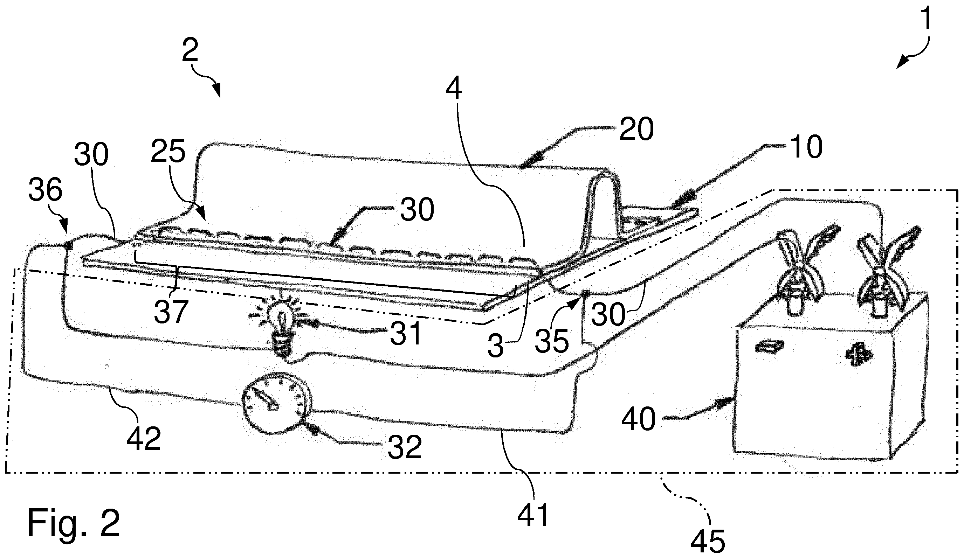

In Fig. 2, an arrangement 1 including a portion of the shell assembly 111 as well as a monitoring device 45, indicated in schematic manner by a double-dot-and-dash line, is shown. The portion of the shell assembly 111 shown is formed as a fibre-reinforced composite assembly 2 including a fibre-reinforced composite stringer 20 arranged on a fibre-reinforced composite skin 10. In the example of Fig. 2, the stringer 20 has an Omega-shaped cross-section.

Production of the composite assembly 2 of Fig. 2 is carried out as follows. Dry reinforcing fibre formation sections such as plies of dry textile reinforcing fibre material are arranged and stacked and are then stitched to each other along seams. Dry fibre material for the stringer 20 might be provided in the form of a preform. By the stitching, preforms can be assembled. In Fig. 2, a first reinforcing fibre formation section 3 for the skin 10 and a second reinforcing fibre formation section 4 for the stringer 20 are schematically indicated for illustration. It is understood, however, that further reinforcing fibre formation sections may be present in each of the skin 10 and stringer 20.

The first and second fibre formation sections 3, 4 are stitched to each other using a yarn 30 along a seam 25, so as to connect the sections 3, 4, in particular in combination with one or more further seam(s). Further, additional fibre formation sections, not illustrated in the Figure, may be connected to the first and second fibre formation sections 3, 4 in this process if desired. The stitching through the fibre formation sections 3, 4 along the seam 25 may be carried out in automated manner, e.g. using a stitching head, and using two needles for example. The stitching head may be carried and manipulated e.g. by a robot or robotic arm.

In Fig. 2, two seams are shown along the longitudinal extent of the stringer 20, joining the stringer 20 to the skin 10, wherein each of the seams runs along one of the stringer feet of the stringer 20. Additional seams may or may not be present. The seam 25 is denoted in Fig. 2 by a reference sign and will be discussed below. The other seam, or further seams, provided to join dry fibre formations of the stringer 20 and the skin 10 to form the joint between skin 10 and stringer 20, may be implemented in the same manner as described for the seam 25, or may alternatively be of other type. The seam 25 is part of a mechanically load-bearing structural joint within the assembly 2 and thus of a load-bearing structural joint in the aircraft fuselage 101.

After completion of the stitching process, the dry fibre formation sections 3, 4 can be infiltrated with curable resin, or a preform assembly comprising the sections 3, 4 can be infiltrated with the resin, for example using VARTM or vacuum assisted resin transfer moulding. Subsequently, curing is performed, e.g. using heat and/or pressure.

By the seam 25, the load-bearing structural joint of the skin 10 and stringer 20 is strengthened. In case the joint is damaged, the stitched seam 25, in the manner of so-called selective stitching, effectively helps to prevent excessive spreading of such damage and thus enhances the damage tolerance of the joint. Conventional "crack-stoppers" such as rivet bolts can be avoided.

In the arrangement 1, the seam 25 connecting at least the fibre formation sections 3 and 4 is formed using a yarn 30, which is electrically conductive along its length.

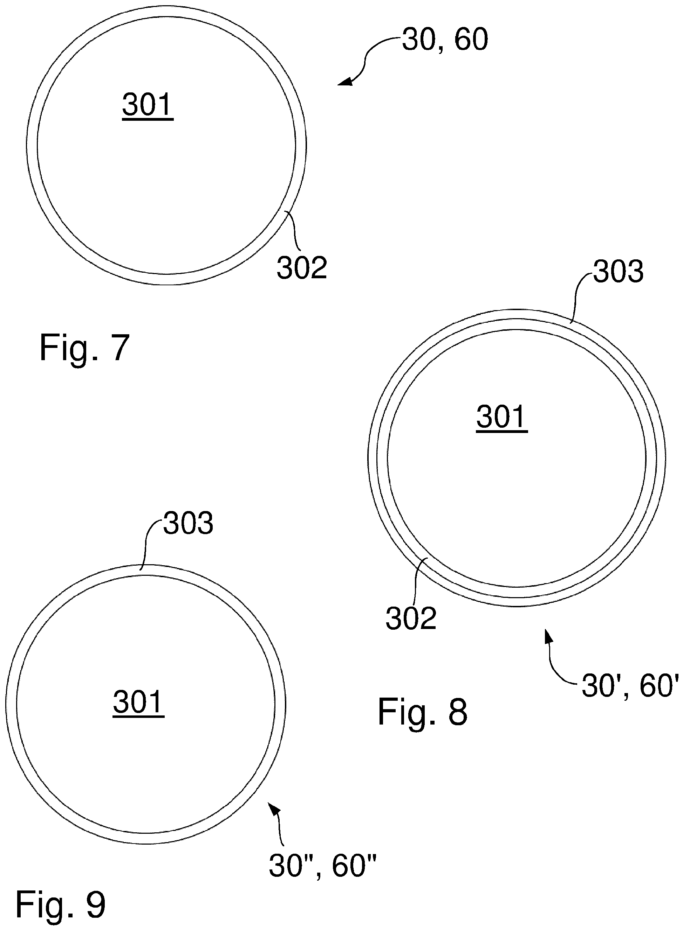

The yarn 30 used in the embodiment of Fig. 2 is illustrated in more detail in Fig. 7. The yarn 30 comprises a load-bearing core 301, for example formed from glass fibres or carbon fibres. In further variants, the load-bearing core 301 may be formed from a polymeric material such as Vectran^{™} or Dyneema^{®}. On the core 301, an electrically conductive layer 302 formed with carbon nanotubes is deposited in the form of a coating to achieve a suitable conductivity along the length of the yarn 30. Carbon nanotubes are tube-shaped nanostructures with one wall or several walls of carbon atoms. Carbon nanotubes have high mechanical strength and are also highly electrically conductive. The layer 302 may e.g. be formed with a carbon nanotube based material such as Tuball^{™}.

A further, modified yarn 30' is displayed in Fig. 8 in schematic manner. The yarn 30' differs from the yarn 30 in that on an outer side of the conductive layer 302, an additional, electrically isolating outer coating 303 has been formed. The yarn 30' may be used in the embodiment of Fig. 2 instead of yarn 30. The isolating outer coating 303 may be formed with an electrically insulating epoxy resin and prevents undesired current flow towards other conductive elements, and in particular towards electrically conductive filaments of the fibre formation sections 3, 4 or other conductive stitching yarns as will be described in more detail below.

Figs. 7 and 8 also illustrate a further yarn 60 of the same type as the yarn 30, as well as a further yarn 60' of the same type as the yarn 30'.

Another yarn 30" is illustrated in Fig. 9 in schematic manner. The yarn 30" comprises a load-bearing electrically conductive core 301, which may be formed with carbon fibre filaments or with a carbon nanotube based material such as Tuball^{™}, and an electrically isolating outer coating 303 provided on an outer side of the core 301. Also in case of the yarn 30", the outer coating 303 may be made with an electrically insulating epoxy resin. Fig. 9 also illustrates a further yarn 60" of the same type as yarn 30".

Preferably, if the fibre formation sections 3, 4 comprise electrically non-conductive fibres such as glass fibres only, yarn 30 without outer insulating coating may be used, or alternatively, a yarn corresponding to the electrically conductive core 301 of Fig. 9 without additional conductive and insulating layers may be used, for stitching. Moreover, in case the fibre formation sections 3, 4 comprise carbon fibres, which exhibit electrical conductivity, it is preferable to use a yarn 30' or 30" for stitching the seam 25 which is provided with an outer coating 303 for electrical insulation, wherein the coating 303 forms an enclosure around the core 301, and if present the conductive layer 302, in circumferential direction.

In case the isolating outer coating 303 is provided, the material of the coating 303 is preferably formed so as to be compatible with the matrix material used to infuse the fibre formation sections 3, 4. If the core 301 or the layer 302 forms the contact surface of the yarn to the matrix, preferably the core 301 or layer 302 is chosen such as to be sufficiently compatible with the matrix material, regarding the material of the core 301 or layer 302.

The yarn 30, 30' or 30" acts as a multi-functional yarn which, in the composite assembly 2, supports mechanical loads introduced into the seam 25, and, beyond this, is used as an integrated, distributed structural health sensor device for monitoring the health status of the seam 25.

The monitoring device 45 comprises, in the embodiment of Fig. 2, an electrical voltage source 40. Each of the terminals of the voltage source 40, which for example is a DC voltage source, is connected to one of the opposite ends of the conductive yarn 30, 30' or 30", that has been used to form the seam 25.

Furthermore, the monitoring device 45 comprises an indicator 31 for the stringer foot yarn status of the yarn 30 at the seam 25, as well as an impedance meter 32 for measuring impedance over the stitched yarn length section 37 along the seam 25 at the stringer foot. The indicator 31 in Fig. 2 forms part of an electric circuit formed with the yarn 30 running from one of the terminals of the voltage source 40 to the other and including the yarn section 37.

Accordingly, the monitoring device 45 is coupled to the yarn 30 in a manner which enables the monitoring device 45 to send an electrical input signal through the yarn 30 extending, via the seam 25, between the positive and negative terminals of the voltage source 40, and hence also along the section 37 of the yarn 30 that forms part of the seam 25. For example, the electrical input signal may a constant DC voltage. A response signal is received on the yarn 30 via the indicator 31, indicating current through the yarn 30. Further, the response of the section 37 to the input signal may be detected using the impedance meter 32 connected via a first connecting line 41 to the yarn 30 at a first location 35 close to one end of the seam 25 and connected via a second connecting line 42 to the yarn 30 at a second location 36 close to the other end of the seam 25.

In the situation shown in Fig. 2, the seam 25 and yarn 30 are intact and undamaged. Therefore, as no detrimental effect on the yarn 30 has led to an increase in the ohmic resistance or impedance thereof, the yarn status indicator 31 in Fig. 2 indicates current as expected for an undamaged yarn 30. This is illustrated in Fig. 2 by a light bulb 31 emitting light at "full power", i.e. emitting light at a defined, strong level indicating intact yarn state. Further, in the situation of Fig. 2, the impedance meter 32 indicates low impedance over the stitched length 37 of the yarn 30 along the seam 25.

While in Fig. 2, the yarn status indicator 31 has been illustrated in schematically simplified manner as a light bulb and the impedance meter 32 as an analog instrument having a scale and a needle, it should be understood that preferably, the functionalities of the status indicator as well as of resistance or impedance measurement will preferably be implemented using one or more electronic circuit(s). The electronic circuit(s) may be implemented in miniaturized manner as integrated circuit(s), in particular using a semiconductor device or a plurality of semiconductor devices. Although this is not shown in detail in the figures, such electronic circuit(s) and the connecting lines coupling the electronic circuit(s) to the yarn or yarns 30, 30' can be provided or arranged throughout the aircraft 100, forming a plurality of monitoring devices 45.

As an alternative to sending a constant electrical input signal in the form of a constant DC voltage, in a variant, the monitoring device 45 may be adapted to provide an electrical input signal varying over time. For instance, an intermittent DC voltage signal may be sent along the yarn 30, in order to monitor the status of the yarn 30 at regular or irregular intervals. In other examples, an AC voltage signal may be sent along the yarn 30, e.g. a sinusoidal signal. The AC voltage signal may be sent continuously or intermittently.

The monitoring device 45 may be used to provide the electrical input signal continuously during the operational life of the assembly 2. Yet, in a preferred variant, the monitoring device 45 is used at intervals during the operational life of the assembly 2, or during periods of time, to monitor the structural health of the seam 25, for example during routine inspection of the aircraft 100, e.g. during pre-takeoff inspection or "walk-around". If the status indicator 31 or the impedance measurement by the impendance meter 32 indicates a resistance or impendance that is higher than expected for an undamaged yarn, the seam 25 can be inspected by staff, e.g visually, in order to determine the cause thereof and the location and extent of damage. Intermittent or continuous sending of input signals and receipt as well as evaluation of response signals could in a variant be performed during flight. The monitoring device 45 may be used to implement predictive maintenance.

In Fig. 2, a skin-stringer assembly 2 of carbon-fibre reinforced plastics (CFRP) is shown, with stringer feet stitched to the skin 10. One of the stitch yarns corresponds to yarn 30, which is part of an electrical circuit, connected to the voltage source 40. The yarn status indicator 31 and the impedance meter 32 over the seam 25 enable status monitoring of the structural health status of the stitched joint. Fig. 2 shows the setup in a simplified manner in order to demonstrate the principle, with intact yarn 30.

Using the arrangement 1 schematically displayed in Fig. 2, it is possible to monitor at least the following damage mechanisms:
- over-straining or stretching of the yarn 30, leading to an increased electrical ohmic resistance or impedance, and rupture of the yarn 30, which prevents a signal to be passed from one end of the yarn 30 to the other, wherein both stretching and rupture can be due to an overload in the joint by over-straining the joint in the out-of-plane direction or can be due to local impact with resulting in-plane damage and peeling; and
- rupture of the yarn 30 due to external mechanical load or cut, e.g. when the joint is damaged by a foreign object.

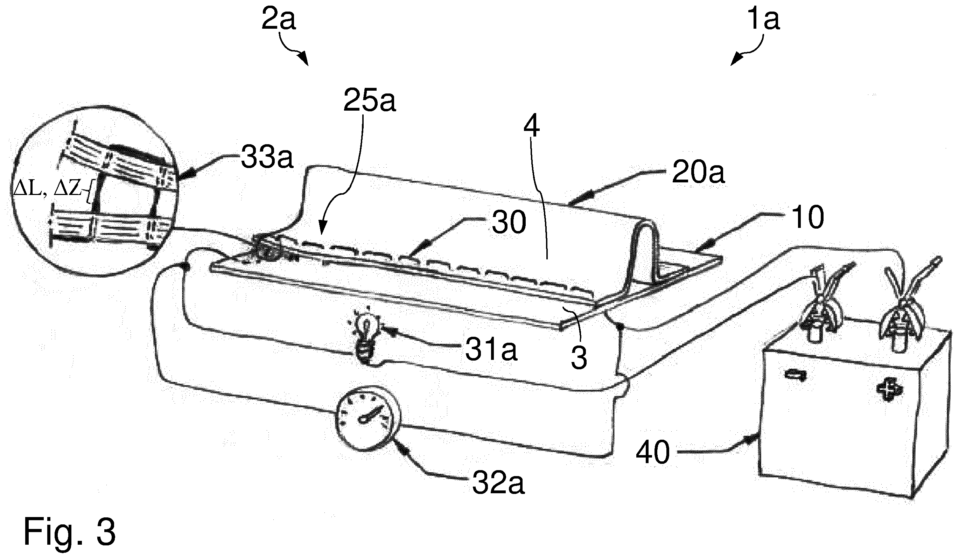

In the following, some types of damage will be described with reference to Figs. 3-5, in which some elements which are those of Fig. 2 are denoted using the reference signs of Fig. 2 with an added "a", "b" or "c", respectively. The reference signs of the yarn 30, the skin 10, the voltage source 40 and the sections 3, 4 that are part of the cured assembly 2, 2a-c remain the same in Figs. 3-5.

Fig. 3 shows the arrangement 1 of Fig. 2, now denoted by reference sign 1a, with a damage at one end of one of the stringer feet of stringer 20a. The damage is due to overload. In Fig. 3, the stringer foot has been torn apart from the skin 10, and a gap is visible between the stringer foot and the skin 10 at the left edge of the front stringer foot in Fig. 3. Still, the stringer 20 and the skin 10 are held together by the stitch yarns, one of which is the yarn 30. The stitch yarns, including yarn 30, have not yet ruptured in Fig. 3.

In detail 33a in Fig. 3, the stretched yarn 30 at the location of the damage is shown. For the purpose of illustration, the stretching has been exaggerated in detail 33a. It can be seen that apart from being elongated by a difference in length ΔL, the yarn 30 also has contracted within the distance of the open gap, by Poisson's ratio. Hence, within the gap, the cross-sectional area of the yarn 30 locally has decreased.

Both the stretching and the contraction, shown at 33a, with the length increased by ΔL and decreased yarn diameter, lead to an increase in electrical impedance ΔZ in this yarn 30, which can be measured. In this manner, the yarn 30 itself functions as an integrated sensor, in addition to the structural function of the yarn 30. The yarn 30 is thus multi-functional.

Due to the changes in diameter and the elongation within the gap, the yarn status indicator 31a, schematically shown again as a light bulb, detects reduced current by emitting reduced light. Also, the impedance meter 32a indicates increased impedance.

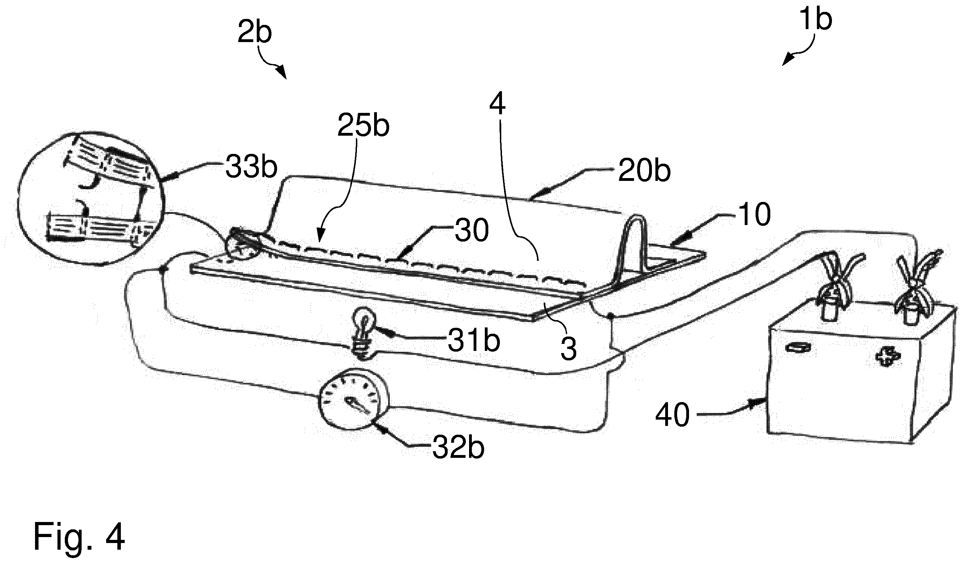

In Fig. 4, a situation analogous to the situation in Fig. 3 is shown, but the damage has increased, so that the stitching yarn 30 has ruptured at one location, in Fig. 4 in exemplary manner at the left edge of the stringer 20b. The yarn status indicator 31b has ceased to emit light, i.e. the bulb is dark, indicating rupture and hence interruption of the electric circuit. The impedance meter 32b indicates indefinite impedance.

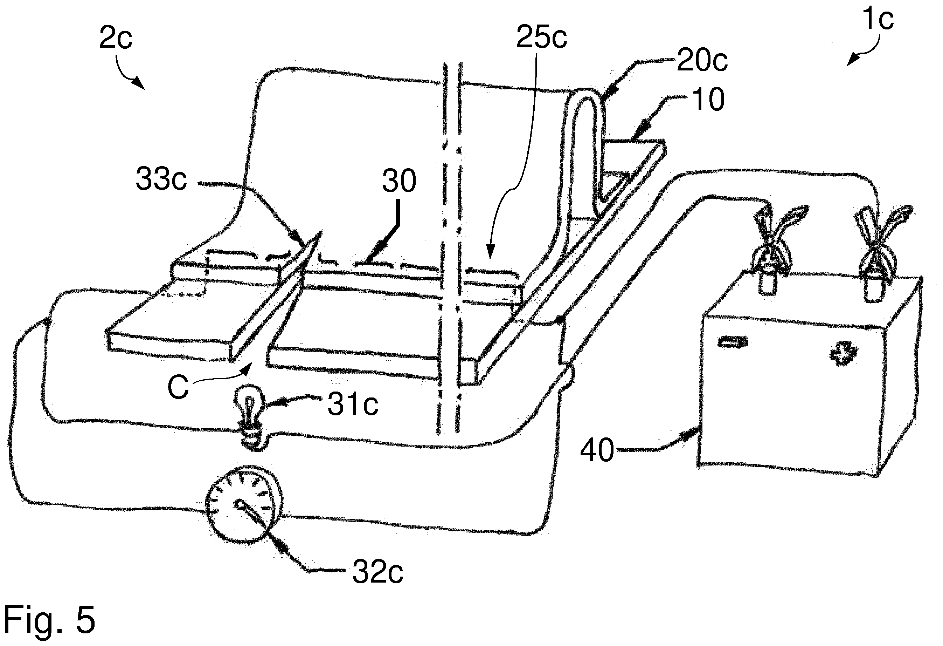

Fig. 5 shows a part of the arrangement 1 of Fig. 2, now denoted by reference sign 1c, with an external damage. A tear or cut C extends through the skin 10 and through the stitched stringer foot of the stringer 20c. The integrated sensing function of the stitching yarn 30 makes it possible to capture a material rupture of this type as well, which cuts off the yarn 30. As in Fig. 4, the yarn status indicator 31c has ceased to emit light, i.e. the bulb is dark, indicating yarn rupture or cut, and the impedance meter 32c indicates indefinite impedance.

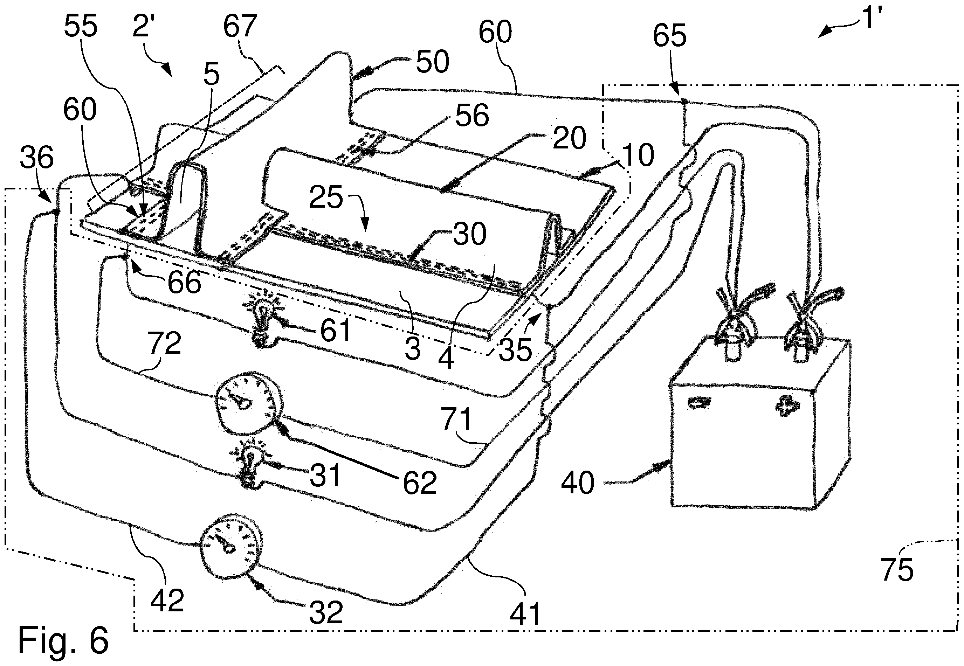

Fig. 6 shows an arrangement 1' according to a second embodiment, comprising a composite assembly 2' and a monitoring device 75, which in schematic manner is denoted by a double-dot-and-dash line. The assembly 2' is formed as a skin-stringer-frame assembly, comprising a skin 10, a stringer 20 and a segment of a frame 50 extending transverse to the stringer 20.

The assembly 2' may preferably form part of a shell assembly 111, see Fig. 1. In Fig. 6, the frame 50 is formed, in exemplary manner, with an approximately Omega-shaped cross-section and comprises two frame feet joining the frame 50 to the skin 10. Portions of the frame feet and stringer feet may overlap, see Fig. 6.

In Fig. 6, the feet both of the stringer 20 and of the frame 50 are stitched to the skin 10 using electrically conductive yarns 30 and 60, respectively. The yarns 30 and 60 may be of the type described above and schematically shown in Fig. 7. In a variant, yarns 30' or 30" and 60' or 60" comprising the isolating coating 303 as described with reference to Fig. 8 may be used in the embodiment of Fig. 6. The yarns 30 and 60, 30' and 60', or 30" and 60" may be of the same type and are intact in Fig. 6. A seam 55 along one of the frame feet, formed using the yarn 60, is partially shown in Fig. 6. A further seam 56 on the opposite frame foot is shown as well.

In addition to the elements 31, 32, 40, 41, 42 of the monitoring device 45 of Fig. 2, the monitoring device 75 of the arrangement 1' further comprises an additional frame foot yarn status indicator 61 and an impedance meter 62 to measure the yarn impedance over the stitched yarn length along the foot of the segment of the frame 50. Specifically, the impedance meter 62 is coupled to the yarn 60 at a first location 65 between one terminal of the voltage source 40 and one end of the seam 55 by a connecting line 71, and at a second location 66 between the other terminal of the voltage source 40 and the other end of the seam 55 by a connecting line 72.

In Fig. 6, the indicators 31, 61 show "full light" indicating intact yarns 30, 60, and the meters 32, 62 indicate a corresponding impedance.

In the same manner as explained above, the functions of the status indicator 61 and impendance meter 62 preferably are implemented using at least one electronic circuit, in particular using at least one semiconductor device, not shown in the figures. For example, the functions of the complete monitoring device 75 may be implemented using at least one electronic circuit. The required voltage could be provided by an appropriate supply line, replacing the schematic voltage source 40.

Thus, in Fig. 6, the seam 25 is crossed by the further seam 55, formed using the conductive yarn 60. Using the yarn 60, a reinforcing fibre formation section 5, which is part of the frame 50 or at least of one of the frame feet thereof, has been stitched to the reinforcing fibre formation section 3 of the skin 10. Afterwards, the fibre formation sections 3, 4, 5 have been infused with resin and cured, as described above for assembly 2, to obtain the composite assembly 2'.

The arrangement 1' enables monitoring of the structural integrity of seams 25, 55 extending in two different directions, substantially transverse with respect to each other. If a damage or rupture is indicated for a seam 25 along the stringer foot, or along a stringer foot of one of several stringers 20, determining the location along the stringer 20 in question is facilitated in the arrangement 1' of Fig. 6. Since multiple frames 50 cross the path of the stringer 20, and the transfer of mechanical loads to the stringers 20 in particular originates from the frames 50, it may be expected that a damage may in many cases affect both the foot of a stringer 20 as well as the foot of the frame 50, and hence the damage can be detected also using the yarn 60. Therefore, monitoring the status of the seams 25 and 55 facilitates determining the location of the damage.

Moreover, for instance, several additional seams 55 crossing seam 25 may be used to detect the extent of a damage, in particular of a crack, and/or to detect a growth rate or spreading rate of such damage, by performing the monitoring continuously or at appropriate intervals.

Each seam 25 or 55 may be implemented using one or more conductive yarns 30, 30', 30" or 60, 60', 60" respectively, as a stitching yarn or stitching yarns only. Alternatively, it is conceivable to use the yarn 30, 30', 30" or 60, 60', 60" in combination with other, static, non-conductive stitching yarns in the seam 25 or 55.

Input signals may be sent along the yarn 30, 30' or 30" and 60, 60' or 60" in a temporally offset manner, in order to precisely separate the responses obtained. Additionally or alternatively, the yarns 30', 60', 30", 60" provided with the isolating coating 303 may be used to implement the seams 25, 55 or at least one of them, in order to electrically separate the seams 25, 55. Further, alternatively or additionally, the yarns 30, 30' or 30" and 60, 60' or 60" may run transversely to each other, as shown in Fig. 6, but on different vertical levels in the out-of-plane direction, for separation of the yarns. One or more fibre layers may then be present between the yarns 30, 30' or 30" and 60, 60' or 60". If desired, it is even conceivable to provide an isolating fibre layer, e.g. formed using a glass-fibre formation, that separates the seams 25, 55.

Even though in Fig. 6, the seam 55 is displayed as interrupted at the location where the frame 50 crosses the stringer 20, it should be noted that, although not displayed, the yarn 60 is guided e.g. above the stringer 20 so that the seam 55 can be continued without severing the yarn 60. In an alternative, not displayed in the figures, it is conceivable to monitor each portion of the seam 55 between two adjacent stringers 20 separately.

The assemblies 2, 2' may each be considered components of the aircraft 100. Yet, the present invention is applicable to other components, smaller or larger than the shell assembly 111, in an aircraft or spacecraft structure, and to components or component assemblies in other fields of technology. More specifically, the assembly 2 or 2' may form part of the fuselage 101, such as in the form of the shell assembly 111, or alternatively may form part of another shell assembly, that for instance forms part of one of the stabilizers 105, 106 or of a wing 102.

The embodiments described above with reference to Figs. 1-8 further illustrate methods of producing composite assemblies 2, 2'.

In addition, the embodiments described above with reference to Figs. 1-8 illustrate methods of monitoring the structural integrity of the assemblies 2, 2' by monitoring the structural health status of the seam 25 or the seams 25 and 55, respectively, wherein an electrical input signal or electrical input signals is/are sent along the yarn(s) 30, 30', 30" and/or 60, 60', 60" and wherein a response signal or response signals is/are received on each of the yarns 30, 30', 30" and/or 60, 60', 60". The generation of the input signal as well as the receipt and evaluation of the response signal is preferably performed using one or more electronic circuits, which may be implemented as integrated circuits using semiconductor device(s).

The monitoring devices 45, 75 of various assemblies 2, 2' of the aircraft structure may be coupled in suitable manner, and health status data obtained using the sensing yarns 30, 30', 30", 60, 60', 60" throughout the aircraft 100 may be collected and processed, e.g. within the aircraft 100, by a data collection and processing device, not shown in the figures. The data collection and processing device may be configured to provide a summary on the health status of the aircraft structure and/or a warning in case of suspected damage to flight staff or maintenance staff, e.g. via a network and a handheld device such as a laptop or smartphone. The summary or warning may be displayed in textual and/or graphical manner using a graphical user interface, including, for example, an indication of the approximate location or area of possible damage.

In all embodiments described above, the composite assembly 2, 2' can comprise fibre formation sections 3, 4 or 3, 4, 5 including carbon fibres, which are infiltrated by a curable resin such as e.g. epoxy resin, followed by curing. Therefore, the skin 10, the stringer 20 and the frame 50 are formed in these embodiments as elements from carbon fibre-reinforced synthetic material or CFRP (carbon fibre-reinforced plastic) elements. Alternatively, the formation sections 3, 4 or 3, 4, 5 may include glass fibres infiltrated by the curable resin, followed by curing, and in this case, the skin 10, stringer 20 and frame 50 may be formed as GFRP (glass fibre-reinforced plastic) elements.

With the invention, in particular the arrangements 1, 1' as well as the methods of the embodiments described hereinabove, at least one or more the following advantages may be obtained:
- a multi-functional yarn, or multi-functional yarns, enable the implementation of stitched joints, for example between skin 10 and stringer 20 or skin 10 and frame 50, with integrated structural health monitoring (SHM) without separate SHM sensors;
- using stitching, the material thickness of the joined elements 10, 20, 50 may be reduced compared to riveted joints, thus the weight of the structure can be kept low, and stress concentrations under load are comparatively small due to the many stitches;
- drilling holes for rivets can be avoided;
- good compatibility of a matrix material and the yarns 30, 30', 60, 60' can be obtained;
- the same yarn(s) fulfill(s) both a static mechanical function as well as a monitoring function, and therefore is/are multi-functional;
- the sensor function of the yarn(s) is capable of capturing both tearing mode damage as well as rupture mode damage in the stitched joint;
- before rupture, damage or incipient damage can be detected, for example by detecting or measuring changes in impedance; accordingly, initial damage beyond limit load capability and well within the damage tolerance domain could be detected, too;
- an amount of stitching which at the same time is sufficient to effectively prevent excessive spread of damage and enables reliable detection of damage can be implemented.

The invention may be useful not only in the field of aircraft or spacecraft, but also in other fields involving composite structures, such as, for example, automobile bodies, wind power plants, or pressurized tanks or vessels.

### List of reference signs

- 1: arrangement with intact seam and yarn
- 1a: arrangement with damaged seam portion and stretched yarn
- 1b: arrangement with damaged seam portion and ruptured yarn
- 1c: arrangement with seam and yarn damaged by cut or tear
- 1': arrangement with two intact crossing seams and yarns
- 2: composite component or composite assembly
- 2a: composite component or assembly with damaged seam portion and stretched yarn
- 2b: composite component or assembly with damaged seam portion and ruptured yarn
- 2c: composite component or assembly with seam and yarn damaged by cut or tear
- 2': composite component or assembly with two intact crossing seams and yarns
- 3: reinforcing fibre formation section
- 4: reinforcing fibre formation section
- 5: reinforcing fibre formation section
- 10: skin
- 20: stringer
- 20a: stringer with damage at stringer foot joint
- 20b: stringer with damage at stringer foot joint
- 20c: stringer with damage at stringer foot joint due to material rupture
- 25: seam joining stringer foot and skin
- 25a: seam joining stringer foot and skin, with damage
- 25b: seam joining stringer foot and skin, with damage
- 25c: seam joining stringer foot and skin, with damage
- 30: conductive yarn forming stitched seam 25 that joins stringer foot and skin
- 30': conductive yarn with isolating outer coating
- 30": conductive yarn with isolating outer coating
- 31: indicator for stringer foot yarn status
- 31a: yarn status indicator 31 in a state indicating over-strained yarn
- 31b: yarn status indicator 31 in a state indicating ruptured yarn
- 31c: yarn status indicator 31 in a state indicating severed yarn due to external rupture or cut
- 32: impedance meter for measuring impedance over stitched yarn length at stringer foot
- 32a: impedance meter 32 indicating increased impedance
- 32b: impedance meter 32 indicating indefinite impendance due to ruptured yarn
- 32c: impedance meter 32 indicating indefinite impendance due to cut yarn
- 33a: detail of seam at damaged seam portion with stretched yarn
- 33b: detail of seam at damaged seam portion with ruptured yarn
- 33c: damaged seam portion with yarn that has been cut, torn or stretched and ruptured by external action
- 35: first location
- 36: second location
- 37: section of yarn
- 40: electrical voltage source
- 41, 42: connecting line
- 45: monitoring device
- 50: frame or frame segment
- 55: seam joining frame foot and skin
- 56: seam joining frame foot and skin
- 60: conductive yarn forming stitched seam 55 that joins frame foot and skin
- 60': conductive yarn with isolating outer coating
- 60": conductive yarn with isolating outer coating61 indicator for frame foot yarn status
- 62: impedance meter for measuring impedance over stitched yarn length at frame foot
- 65: first location
- 66: second location
- 67: section of yarn
- 71, 72: connecting line
- 75: monitoring device
- 100: aircraft
- 101: fuselage
- 102: wing
- 103: nose
- 104: empennage
- 105: vertical stabilizer
- 106: horizontal stabilizer
- 107: engine
- 111: shell assembly
- 301: load-bearing core
- 302: conductive layer
- 303: isolating outer coating
- C: tear or cut
- ΔL: change in length
- ΔZ: change in impedance

## Claims

1. Arrangement (1, 1a-c; 1') including
a fibre-reinforced composite component or composite assembly (2, 2a-c; 2') which comprises at least first and second reinforcing fibre formation sections (3, 4; 3, 5) stitched to each other using a yarn (30; 30'; 60; 60') so as to connect the first and second reinforcing fibre formation sections (3, 4; 3, 5) along a seam (25, 25a-c; 55), the yarn (30; 30'; 30"; 60; 60'; 60") being electrically conductive along a length thereof, and
a monitoring device (45; 75) adapted and coupled to the yarn (30; 30'; 30"; 60; 60'; 60") in such a manner as to be capable of sending an electrical input signal along at least a section (37; 67) of the yarn (30; 30'; 30"; 60; 60'; 60") that forms the seam (25, 25a-c; 55) or part thereof and receiving a response signal on the yarn (30; 30'; 30"; 60; 60'; 60").

2. Arrangement according to claim 1, **characterized in that**
the monitoring device (45; 75) is adapted to detect or measure an ohmic resistance and/or impedance of a portion of the yarn (30; 30'; 30"; 60; 60'; 60") which includes the section (37; 67) of the yarn (30; 30'; 30"; 60; 60'; 60") forming the seam (25, 25a-c; 55) or part thereof.

3. Arrangement according to claim 1 or 2, **characterized in that**
the monitoring device (45; 75) is adapted to send a constant electrical input signal or a time-varying electrical input signal, in particular a constant voltage input signal or a time-varying voltage input signal, and/or **in that**
the monitoring device (45; 75) is adapted to provide the input signal at intervals or within continuous time periods or continuously during the operational life of the composite component or composite assembly (2, 2a-c; 2').

4. Arrangement according to at least one of the preceding claims, **characterized in that** within the seam (25, 25a-c; 55), the yarn (30; 30'; 30"; 60; 60'; 60") has a function of supporting mechanical loads as well as a function of an integrated structural health sensor device.

5. Arrangement according to at least one of the preceding claims, **characterized in that** the seam (25, 25a-c; 55) forms part of a mechanically load-bearing structural joint.

6. Arrangement according to at least one of the preceding claims, **characterized in that** the yarn (30; 30'; 60; 60') comprises a load-bearing yarn core (301) as well as an electrically conductive layer (302) provided on the yarn core (301), and in particular **in that** the electrically conductive layer (302) provided on the yarn core (301) comprises carbon nano-tubes.

7. Arrangement according to at least one of the preceding claims, **characterized in that** the yarn (30'; 30"; 60'; 60") comprises an electrically isolating outer coating (303).

8. Arrangement according to at least one of the preceding claims, **characterized in that** the monitoring device (45; 75) comprises at least one electronic circuit, in particular implemented using at least one semiconductor device.

9. Arrangement according to at least one of the preceding claims, **characterized in that** the seam (25) is crossed by at least one further seam (55), wherein the at least one further seam (55) is formed at least in part by stitching using a further yarn (60; 60'; 60"), the further yarn (60; 60'; 60") being electrically conductive along a length thereof.

10. Arrangement according to at least one of the preceding claims, **characterized in that** the composite assembly (2, 2a-c; 2') is formed as a shell assembly (111) comprising a stringer (20) coupled to a skin (10), wherein one (4) of the first and second reinforcing fibre formation sections (3, 4) forms part of the stringer (20), in particular of a stringer foot thereof, and another one (3) of the first and second reinforcing fibre formation sections (3, 4) forms part of the skin (10).

11. Arrangement according to claim 10 in connection with claim 9, **characterized in that** the shell assembly (111) further comprises a frame (50) or a segment of a frame (50), wherein the further seam (55) is formed by stitching through a further reinforcing fibre formation section (5) forming part of the frame (50) or the segment, in particular of a frame foot thereof, using the further yarn (60; 60'; 60").

12. Aircraft or spacecraft (100) comprising at least one arrangement (1, 1a-c; 1') according to at least one of the preceding claims, wherein the composite component or composite assembly (2, 2a-c; 2') in particular forms part of an aircraft or spacecraft structure.

13. Method of producing an arrangement (1, 1a-c; 1') including a fibre-reinforced composite component or composite assembly (2, 2a-c; 2'), the method comprising:
providing at least first and second reinforcing fibre formation sections (3, 4; 3, 5);
providing a yarn (30; 30'; 30"; 60; 60'; 60") that is electrically conductive along a length thereof;
arranging the first and second reinforcing fibre formation sections (3, 4; 3, 5) relative to each other;
stitching through the first and second reinforcing fibre formations sections (3, 4; 3, 5) using the yarn (30; 30'; 30"; 60; 60'; 60") so as to connect the first and second fibre formation sections (3, 4; 3, 5) along a seam (25; 55);
providing a monitoring device (45; 75) and coupling the monitoring device (45; 75) to the yarn (30; 30'; 30"; 60; 60'; 60") in such a manner as to enable the monitoring device (45; 75) to send an electrical input signal along at least a section (37; 67) of the yarn (30; 30'; 30"; 60; 60'; 60") that forms at least part of the seam (25; 55) and to receive a response signal on the yarn (30; 30'; 30"; 60; 60'; 60").

14. Method of monitoring the structural integrity of a fibre-reinforced composite component or composite assembly (2, 2a-c; 2') including a seam (25, 25a-c; 55) formed by stitching using a yarn (30; 30'; 30"; 60; 60'; 60"), wherein the method comprises monitoring the structural health status of the seam (25, 25a-c; 55), including:
sending an electrical input signal along at least a section (37; 67) of the yarn (30; 30'; 30"; 60; 60'; 60") that forms at least part of the seam (25, 25a-c; 55); and
receiving a response signal on the yarn (30; 30'; 30"; 60; 60'; 60") and evaluating the response signal.

15. Method according to claim 14, **characterized in that**
the method comprises detecting over-straining and/or rupture of the yarn (30; 30'; 30"; 60; 60'; 60") within the section (37; 67) that forms at least part of the seam (25, 25a-c; 55).

## Patentansprüche

1. Anordnung (1, 1a-c; 1'), die folgendes einschließt:
ein faserverstärktes Verbundstoffbauteil oder eine faserverstärkte Verbundstoffanordnung (2, 2a-c; 2'), das/die mindestens erste und zweite Faserbildungsabschnitte (3, 4; 3, 5) umfasst, die unter Verwendung eines Garns (30; 30'; 60; 60') aneinander geheftet sind, um so den ersten und den zweiten Verstärkungsfaserbildungsabschnitt (3, 4; 3, 5) entlang einer Naht (25, 25a-c; 55) zu verbinden, wobei das Garn (30; 30'; 30"; 60; 60'; 60") entlang einer Länge davon elektrisch leitfähig ist, und
eine Überwachungsvorrichtung (45; 75), die in einer solchen Weise eingerichtet und an das Garn (30; 30'; 30"; 60; 60'; 60") gekoppelt ist, dass sie in der Lage ist, ein elektrisches Eingabesignal entlang mindestens eines Abschnitts (37; 67) des Garns (30; 30'; 30"; 60; 60'; 60"), welcher die Naht (25, 25a-c; 55) bildet, oder eines Teils davon zu senden und ein Antwortsignal auf dem Garn (30; 30'; 30"; 60; 60'; 60") zu empfangen.

2. Anordnung nach Anspruch 1, **dadurch gekennzeichnet, dass**
die Überwachungsvorrichtung (45; 75) eingerichtet ist, um einen ohmschen Widerstand und/oder eine Impedanz eines Anteils des Garns (30; 30'; 30"; 60; 60'; 60") zu detektieren oder zu messen, der den Abschnitt (37; 67) des Garns (30; 30'; 30"; 60; 60'; 60") einschließt, der die Naht (25, 25a-c; 55) oder einen Teil davon bildet.

3. Anordnung nach Anspruch 1 oder 2, **dadurch gekennzeichnet, dass**
die Überwachungsvorrichtung (45; 75) eingerichtet ist, um ein konstantes elektrisches Eingabesignal oder ein zeitlich variierendes elektrisches Eingabesignal, insbesondere ein Eingabesignal mit konstanter Spannung oder ein Eingabesignal mit zeitlich variierenden Spannung zu senden, und/oder dass
die Überwachungsvorrichtung (45; 75) eingerichtet ist, um das Eingabesignal in Intervallen oder innerhalb kontinuierlicher Zeitperioden oder kontinuierlich während der Betriebslebensdauer des Verbundstoffbauteils oder der Verbundstoffanordnung (2, 2a-c; 2') zu senden.

4. Anordnung nach mindestens einem der vorhergehenden Ansprüche, **dadurch gekennzeichnet, dass**
innerhalb der Naht (25, 25a-c; 55) das Garn (30; 30'; 30"; 60; 60'; 60") eine Funktion des Unterstützens von mechanischen Lasten sowie eine Funktion einer integrierten Sensorvorrichtung für strukturelle Gesundheit aufweist.

5. Anordnung nach mindestens einem der vorhergehenden Ansprüche, **dadurch gekennzeichnet, dass**
die Naht (25, 25a-c; 55) Teil einer mechanische Last tragenden strukturellen Verbindungsstelle bildet.

6. Anordnung nach mindestens einem der vorhergehenden Ansprüche, **dadurch gekennzeichnet, dass**
das Garn (30; 30'; 60; 60') einen Last tragenden Garnkern (301) sowie eine elektrisch leitfähige Schicht (302) umfasst, die auf dem Garnkern (301) bereitgestellt wird, und dass insbesondere die elektrisch leitfähige Schicht (302), die auf dem Garnkern (301) bereitgestellt wird, Kohlenstoffnanoröhrchen umfasst.

7. Anordnung nach mindestens einem der vorhergehenden Ansprüche, **dadurch gekennzeichnet, dass**
das Garn (30'; 30"; 60'; 60") eine elektrisch isolierende Außenbeschichtung (303) umfasst.

8. Anordnung nach mindestens einem der vorhergehenden Ansprüche, **dadurch gekennzeichnet, dass**
die Überwachungsvorrichtung (45; 75) mindestens eine elektronische Schaltung umfasst, die insbesondere unter Verwendung von mindestens einer Halbleitervorrichtung implementiert ist.

9. Anordnung nach mindestens einem der vorhergehenden Ansprüche, **dadurch gekennzeichnet, dass**
die Naht (25) von mindestens einer weiteren Naht (55) gekreuzt wird, wobei die mindestens eine weitere Naht (55) mindestens teilweise durch Heften unter Verwendung eines weiteren Garns (60; 60'; 60") gebildet wird, wobei das weitere Garn (60; 60'; 60") entlang einer Länge davon elektrisch leitfähig ist.

10. Anordnung nach mindestens einem der vorhergehenden Ansprüche, **dadurch gekennzeichnet, dass**
die Verbundstoffanordnung (2, 2a-c; 2') als Mantelanordnung (111) gebildet ist, umfassend einen Holm (20), der an eine Haut (10) gekoppelt ist, wobei einer (4) von dem ersten und dem zweiten Verstärkungsfaserbildungsabschnitt (3, 4) einen Teil des Holms (20) bildet, insbesondere einen Holmfuß davon, und ein anderer (3) von dem ersten und zweiten Verstärkungsfaserbildungsabschnitt (3, 4) einen Teil der Haut (10) bildet.

11. Anordnung nach Anspruch 10 in Verbindung mit Anspruch 9, **dadurch gekennzeichnet, dass** die Mantelanordnung (111) ferner einen Rahmen (50) oder ein Segment eines Rahmens (50) umfasst, wobei die weitere Naht (55) durch Heften durch einen weiteren Verstärkungsfaserbildungsabschnitt (5) hindurch, der einen Teil des Rahmens (50) oder des Segments bildet, insbesondere eines Rahmenfußes davon, unter Verwendung des weiteren Garns (60; 60'; 60") gebildet wird.

12. Luftfahrzeug oder Raumfahrzeug (100), umfassend mindestens eine Anordnung (1, 1a-c; 1') gemäß mindestens einem der vorhergehenden Ansprüche, wobei das Verbundstoffbauteil oder die Verbundstoffanordnung (2, 2a-c; 2') insbesondere einen Teil einer Luftfahrzeug- oder Raumfahrzeugstruktur bildet.

13. Verfahren zum Herstellen einer Anordnung (1, 1a-c; 1'), die ein faserverstärktes Verbundstoffbauteil oder eine faserverstärkte Verbundstoffanordnung (2, 2a-c; 2') einschließt, wobei das Verfahren umfasst:
Bereitstellen von mindestens ersten und zweiten Verstärkungsfaserbildungsabschnitten (3, 4; 3, 5);
Bereitstellen eines Garns (30; 30'; 30"; 60; 60'; 60"), das entlang einer Länge davon elektrisch leitfähig ist; Anordnen des ersten und des zweiten Verstärkungsfaserbildungsabschnitts (3, 4; 3, 5) relativ zueinander;
Heften durch den ersten und den zweiten Verstärkungsfaserbildungsabschnitt (3, 4; 3, 5) hindurch unter Verwendung des Garns (30; 30'; 30"; 60; 60'; 60"), um so den ersten und den zweiten Faserbildungsabschnitt (3, 4; 3, 5) entlang einer Naht (25; 55) zu verbinden;
Bereitstellen einer Überwachungsvorrichtung (45; 75) und Koppeln der Überwachungsvorrichtung (45; 75) an das Garn (30; 30'; 30"; 60; 60'; 60") in einer solchen Weise, dass der Überwachungsvorrichtung (45; 75) ermöglicht wird, ein elektrisches Eingabesignal entlang mindestens eines Abschnitts (37; 67) des Garns (30; 30'; 30"; 60; 60'; 60"), welcher mindestens einen Teil der Naht (25; 55) bildet, zu senden und ein Antwortsignal auf dem Garn (30; 30'; 30"; 60; 60'; 60") zu empfangen.

14. Verfahren zum Überwachen der strukturellen Integrität eines faserverstärkten Verbundstoffbauteils oder einer faserverstärkten Verbundstoffanordnung (2, 2a-c; 2'), das/die eine Naht (25, 25a-c; 55) einschließt, die durch Heften unter Verwendung eines Garns (30; 30'; 30"; 60; 60'; 60") gebildet ist, wobei das Verfahren Überwachen des strukturellen Gesundheitsstatus der Naht (25, 25a-c; 55) umfasst, einschließend:
Senden eines elektrischen Eingabesignals entlang mindestens eines Abschnitts (37; 67) des Garns (30; 30'; 30"; 60; 60'; 60"), der mindestens einen Teil der Naht (25, 25a-c; 55) bildet; und
Empfangen eines Antwortsignals auf dem Garn (30; 30'; 30"; 60; 60'; 60") und Auswerten des Antwortsignals.

15. Verfahren nach Anspruch 14, **dadurch gekennzeichnet, dass**
das Verfahren Detektieren von Überlastung und/oder Reißen des Garns (30; 30'; 30"; 60; 60'; 60") innerhalb des Abschnitts (37; 67) umfasst, der mindestens einen Teil der Naht (25, 25a-c; 55) bildet.

## Revendications

1. Agencement (1, 1a-c ; 1') comportant
un composant composite ou ensemble composite renforcé de fibres (2, 2a-c ; 2') qui comprend au moins une première et une deuxième section de formation de fibres de renforcement (3, 4 ; 3, 5) cousues l'une à l'autre au moyen d'un fil (30 ; 30' ; 60 ; 60') de manière à relier la première et la deuxième section de formation de fibres de renforcement (3, 4 ; 3, 5) le long d'un assemblage (25, 25a-c ; 55), le fil (30 ; 30' ; 30" ; 60 ; 60' ; 60") étant électriquement conducteur sur une longueur de celui-ci, et
un dispositif de surveillance (45 ; 75) adapté et couplé au fil (30 ; 30' ; 30" ; 60 ; 60' ; 60") de manière à pouvoir envoyer un signal électrique d'entrée le long d'au moins une section (37 ; 67) du fil (30 ; 30' ; 30" ; 60 ; 60' ; 60") qui forme l'assemblage (25, 25a-c ; 55) ou une partie de celui-ci et recevoir un signal de réponse sur le fil (30 ; 30' ; 30" ; 60 ; 60' ; 60").

2. Agencement selon la revendication 1, **caractérisé en ce que**
le dispositif de surveillance (45 ; 75) est adapté pour détecter ou mesurer une résistance ohmique et/ou une impédance d'une partie du fil (30 ; 30' ; 30" ; 60 ; 60' ; 60") qui inclut la section (37 ; 67) du fil (30 ; 30' ; 30" ; 60 ; 60' ; 60") formant l'assemblage (25, 25a-c ; 55) ou une partie de celui-ci.

3. Agencement selon la revendication 1 ou 2, **caractérisé en ce que**
le dispositif de surveillance (45 ; 75) est adapté pour envoyer un signal électrique d'entrée constant ou un signal électrique d'entrée variable dans le temps, en particulier un signal de tension d'entrée constant ou un signal de tension d'entrée variable dans le temps, et/ou **en ce que**
le dispositif de surveillance (45 ; 75) est adapté pour délivrer le signal d'entrée par intervalles ou à l'intérieur de laps de temps continus ou en continu pendant la durée de service du composant composite ou ensemble composite (2, 2a-c ; 2').

4. Agencement selon au moins une des revendications précédentes, **caractérisé en ce que**,
à l'intérieur de l'assemblage (25, 25a-c ; 55), le fil (30 ; 30' ; 30" ; 60 ; 60' ; 60") a une fonction de support des charges mécaniques ainsi qu'une fonction de dispositif intégré de détection de la santé structurale.

5. Agencement selon au moins une des revendications précédentes, **caractérisé en ce que**
l'assemblage (25, 25a-c ; 55) forme une partie d'un joint structural mécaniquement porteur.

6. Agencement selon au moins une des revendications précédentes, **caractérisé en ce que**
le fil (30 ; 30' ; 60 ; 60') comprend une âme de fil porteuse (301) ainsi qu'une couche électriquement conductrice (302) disposée sur l'âme de fil (301), et en particulier **en ce que** la couche électriquement conductrice (302) disposée sur l'âme de fil (301) comprend des nanotubes de carbone.

7. Agencement selon au moins une des revendications précédentes, **caractérisé en ce que**
le fil (30 ; 30' ; 60 ; 60') comprend un revêtement externe électriquement isolant (303).

8. Agencement selon au moins une des revendications précédentes, **caractérisé en ce que**
le dispositif de surveillance (45 ; 75) comprend au moins un circuit électronique, en particulier mis en œuvre au moyen d'au moins un dispositif semi-conducteur.

9. Agencement selon au moins une des revendications précédentes, **caractérisé en ce que**
l'assemblage (25) est croisé par au moins un autre assemblage (55), dans lequel l'au moins un autre assemblage (55) est formé au moins en partie par couture au moyen d'un autre fil (60 ; 60' ; 60"), l'autre fil (60 ; 60' ; 60") étant électriquement conducteur sur une longueur de celui-ci.

10. Agencement selon au moins une des revendications précédentes, **caractérisé en ce que**
l'ensemble composite (2, 2a-c ; 2') est formé comme un ensemble enveloppe (111) comprenant une lisse (20) couplée à un revêtement (10), dans lequel une (4) des première et deuxième sections de formation de fibres de renforcement (3, 4) forme une partie de la lisse (20), en particulier d'un pied de lisse de celle-ci, et une autre (3) des première et deuxième sections de formation de fibres de renforcement (3, 4) forme une partie du revêtement (10).

11. Agencement selon la revendication 10 lorsqu'elle est dépendante de la revendication 9, **caractérisé en ce que** l'ensemble enveloppe (111) comprend en outre un cadre (50) ou un segment d'un cadre (50), dans lequel l'autre assemblage (55) est formé par couture à travers une autre section de formation de fibres de renforcement (5) formant une partie du cadre (50) ou du segment, en particulier d'un pied de cadre de celui-ci, au moyen de l'autre fil (60 ; 60' ; 60").

12. Aéronef ou engin spatial (100) comprenant au moins un agencement (1, 1a-c; 1') selon au moins une des revendications précédentes, dans lequel le composant composite ou ensemble composite (2, 2a-c ; 2') forme en particulier une partie d'une structure d'aéronef ou d'engin spatial.

13. Procédé de production d'un agencement (1, 1a-c ; 1') comportant un composant composite ou ensemble composite renforcé de fibres (2, 2a-c ; 2'), le procédé comprenant :
l'obtention d'au moins une première et une deuxième section de formation de fibres de renforcement (3, 4 ; 3, 5) ;
l'obtention d'un fil (30 ; 30' ; 30" ; 60 ; 60' ; 60") qui est électriquement conducteur sur une longueur de celui-ci ;
l'agencement de la première et la deuxième section de formation de fibres de renforcement (3, 4 ; 3, 5) l'une par rapport à l'autre ;
la réalisation d'une couture à travers la première et la deuxième section de formation de fibres de renforcement (3, 4 ; 3, 5) au moyen du fil (30 ; 30' ; 30" ; 60 ; 60' ; 60") de manière à relier la première et la deuxième section de formation de fibres de renforcement (3, 4 ; 3, 5) le long d'un assemblage (25 ; 55) ;
l'obtention d'un dispositif de surveillance (45 ; 75) et le couplage du dispositif de surveillance (45 ; 75) au fil (30 ; 30' ; 30" ; 60 ; 60' ; 60") de manière à permettre au dispositif de surveillance (45 ; 75) d'envoyer un signal électrique d'entrée le long d'au moins une section (37 ; 67) du fil (30 ; 30' ; 30" ; 60 ; 60' ; 60") qui forme au moins une partie de l'assemblage (25 ; 55) et de recevoir un signal de réponse sur le fil (30 ; 30' ; 30" ; 60 ; 60' ; 60").

14. Procédé de surveillance de l'intégrité structurale d'un composant composite ou ensemble composite renforcé de fibres (2, 2a-c ; 2') comportant un assemblage (25, 25a-c ; 55) formé par couture au moyen d'un fil (30 ; 30' ; 30" ; 60 ; 60' ; 60"), le procédé comprenant la surveillance de l'état de santé structural de l'assemblage (25, 25a-c ; 55), y compris :
l'envoi d'un signal électrique d'entrée le long d'au moins une section (37 ; 67) du fil (30 ; 30' ; 30" ; 60 ; 60' ; 60") qui forme au moins une partie de l'assemblage (25, 25a-c ; 55) ; et
la réception d'un signal de réponse sur le fil (30 ; 30' ; 30" ; 60 ; 60' ; 60") et l'évaluation du signal de réponse.

15. Procédé selon la revendication 14, **caractérisé en ce que**
le procédé comprend la détection d'une déformation excessive et/ou d'une rupture du fil (30 ; 30' ; 30" ; 60 ; 60' ; 60") à l'intérieur de la section (37 ; 67) qui forme au moins une partie de l'assemblage (25, 25a-c ; 55) .
